# EUROPÄISCHE PATENTANMELDUNG

(11) **EP 4 029 407 A1**
(43) Veröffentlichungstag der Anmeldung: **20.07.2022**
(21) Anmeldenummer: 21152035.8
(22) Anmeldetag: 18.01.2021
(51) Int. Cl.: A46D 1/00, A46B 1/00, A46B 5/02

(54) **EINFACH REZYKLIERBARE BORSTENWARE**

(71) Anmelder: Evonik Operations GmbH, 45128 Essen (DE)
(72) Erfinder: Hermes, Florian, 45721 Haltern am See (DE); Kannengiesser, Uwe, 46509 Xanten (DE); Richter, Aleander, 45721 Haltern am See (DE); Wieder, Kerstin, 48149 Münster (DE)
(74) Vertreter: Evonik Patent Association

(57) **Zusammenfassung**

Die vorliegende Erfindung betrifft Borstenware, die die Bestandteile Monofile oder Borsten und zumindest einen Kopf, Griff, und/oder Hals aufweist, welche dadurch gekennzeichnet ist, dass die Bestandteile Polymere aus der gleichen Polymerklasse, ausgewählt aus Polymer und/oder Copolymer, aufweisen oder aus diesem bestehen.

## Beschreibung

Die vorliegende Erfindung betrifft Borstenware, die einfach rezykliert werden kann, da ihre Bestandteile das gleiche Material aufweisen oder aus diesem bestehen.

Im Stand der Technik wird allgemein eine Mehrzahl Materialien, zumindest aber eine Materialpaarung verwendet, um eine gewisse Haltbarkeit der Borstenware zu gewährleisten. Bei Zahnbürsten beispielsweise werden neben Kunststoff Metallplättchen an den Monofilen bzw. Borsten eingesetzt. Die gebündelten Borsten werden schlaufenförmig um diese Metallplättchen gebogen und in das Bohrloch des Kopfes der Borstenware eingepresst. Eine Alternative besteht darin, dass gebündelte Borsten mit fließendem Kunststoff ummantelt werden, um diese anschließend in dem bekannten Verfahren der Bündeleinspritzbesteckung in den Hohlräumen des Borstenkopfes zu verankern.

In einer Abwandlung dieser Vorgehensweise wird das Material der Borsten mit einem Basiskunststoff kombiniert, der bei Erwärmung plastisch wird. In der sogenannten Bündeleinfügebesteckung werden die Borstenbündel mit diesem Basiskunststoff ummantelt und in erhitztem Zustand in die Hohlräume des Kopfes gefügt.

Ein Überblick über diese Techniken findet sich z.B. in der Dissertation von Susanne Wurbs an der Medizinischen Fakultät der Georg-August-Universität zu Göttingen, 2011. Eine Veranschaulichung zeigt das Video "How Toothbrushes Are Made", https://www.youtube.com/watch?v=i2pllal6HmU&feature=youtu.be.

Ein besonderer Problemkreis bei Borstenware aus Kunststoff ist deren Entsorgung. Denn obwohl die Reinhaltung unserer Umwelt seit Langem in dem Bewusstsein der Öffentlichkeit ist, liegt in der Rezyklierung von Polymeren noch immer eine große technische Herausforderung.

Eine Rezyklierung im Sinne einer werkstofflichen *Aufbereitung* findet sich nur bei 33 % aller Kunststoffe, dargelegt beispielsweise in einem Internet Artikel der Hunold + Knoop Kunststofftechnik, https://www.hunold-knoop.de/kunststoffwissen/kunststoffblog/details/kunststoff-recycling-3-methoden).

Dabei werden Altteile zerkleinert, gereinigt und nach Sorten getrennt. Metallische Anteile lassen sich über Schmelzfiltration, Schreddern, Abtrennen oder über eine Dichtetrennung entfernen. Thermoplastische Kunststoffe werden anschließend bei hoher Temperatur geschmolzen und neu aufbereitet.

Die Trennung nach Sorten allerdings ist umso aufwendiger, je mehr Sorten in dem zu rezyklierenden Gegenstand eingesetzt sind. Ohne Trennung nach Sorten rechnet man mit einer verminderten, zumindest sehr schwer steuerbaren Materialqualität des Gegenstandes aus rezykliertem Kunststoff.

Lediglich 1 % aller Kunststoffe werden im Rahmen der rohstofflichen Rezyklierung *wiederverwertet.* Bei solchen Verfahren werden die Polymerketten im Kunststoff aufgespalten. Dabei entstehen Monomere, Öle und Gase, die zu neuen Kunststoffen verarbeitet werden können. Dieses Verfahren eignet sich auch für vermischte und verschmutzte Materialien. Selbstverständlich ist die Aufspaltung von Polymerketten im Kunststoff von der Kombination unterschiedlicher Kunststoffe abhängig. Ein Beispiel dieser rohstofflichen Rezyklierung ist die unselektive thermochemische Herstellung von sogenanntem Pyrolyseöl, indem verflüssigte Polymere in einem Cracker umgesetzt werden (https://www.basf.com/global/de/who-weare/sustainability/we-drive-sustainable-solutions/circular-economy/mass-balanceapproach/chemcycling.html).

Beim sogenannten Monomer-Recycling werden Polymerketten durch selektive chemische Reaktionen in Monomereinheiten umgesetzt. Ein Beispiel dafür ist die Spaltung von Nylon 6 in das Monomer Caprolactam. Die Umsetzungsprodukte können nach Aufreinigung teilweise wieder polymerisiert werden.

Es ist bekannt, dass sich in einer im Prinzip homogenen Kunststoff-Matrix Einschlüsse anderer Polymere wie Fremdkörper verhalten. Denn viele Polymere sind gegeneinander chemisch unverträglich, gleichbedeutend damit, dass sie begrenzt Adhäsion entwickeln, wenn sie zusammengeführt und -geschmolzen werden. Weiterhin sind unterschiedliche Polymere in den meisten Fällen nicht miteinander mischbar. Gegebenenfalls müssen sogenannte "Verträglichmacher" eingesetzt werden, um eine gewünschte Zähmodifizierung zu erreichen.

Im Stand der Technik wird zumeist beobachtet, dass schon bei geringen Anteilen eines Kunststoffs in einem anderen Kunststoff die Eigenschaften des Matrix-Kunststoffes umso mehr herabgesetzt sind, je unterschiedlicher die chemische Struktur seiner Anteile ist. Je nach Art des eingeschlossenen bzw. beabsichtigt zugemischten Kunststoffanteils können auch völlig unbefriedigende Resultate auftreten.

So ist ganz allgemein beim Umgang mit Kunststoffabfällen die Sortenreinheit von steigendem Interesse. Auch die Forderung nach Reduktion der Vielfalt eingesetzter Kunststoffe gewinnt immer mehr an Bedeutung. Ein Überblick findet sich bei "Kunststoffe.de", https://www.kunststoffe.de/themen/basics/recycling/werkstoffliches-recycling/artikel/recycling-von-mischkunststoffen-1001658.html

Aufgabe der Erfindung war es also, Kunststoffgegenstände bereit zu stellen, die den oben genannten Forderungen und Problemstellungen Rechnung tragen.

Gegenstand der Erfindung ist somit eine Borstenware, aufweisend die Bestandteile:
- Monofile oder Borsten, und
- zumindest einen Kopf, Griff, und/oder Hals,
welche dadurch gekennzeichnet ist, dass die Bestandteile Polymere aus der gleichen Polmerklasse, ausgewählt aus Polymer und/oder Copolymer, aufweisen oder aus diesem bestehen.

Die Erfindung wird im Folgenden näher erläutert.

Die erfindungsgemäße Borstenware kann an ihrem Kopf, am Griff, und/oder an ihrem Hals zumindest ein Grip-Element aufweisen, wobei das zumindest eine Grip-Element Polymere aus der gleichen Polymerklasse (z. B. Polyamid und Polyetherblockamid) wie die Bestandteile der Borstenware aufweist oder aus diesem besteht.

Vorzugsweise können die Bestandteile der Borstenware aus Polymer der gleichen Polymerklasse bestehen. Eine solche ideale Sortenreinheit vereinfacht das Rezyklieren in besonderem Maße.

Es kann weiterhin vorteilhaft sein, wenn das Polymer oder Copolymer der erfindungsgemäßen Borstenware ausgewählt ist aus Polymerisaten der Monomere Hexamethylendiamin/Azelainsäure, Hexamethylendiamin/Dodecandisäure, 11-Aminoundecansäure, ω-Aminododecansäure, Laurinlactam, Tetramethylendiamin/Adipinsäure, Dodecandiamin/Dodecandisäure, Caprolactam/Laurinlactam, Hexamethylendiamin/ Decandisäure, 1,10-Decamethylendiamin/1,10-Decandisäure.

Besonders bevorzugt kann das Polymer oder Copolymer der erfindungsgemäßen Borstenware ein Polymerisat aus den Monomeren Laurinlactam, 11-Aminoundecansäure, ω-Aminododecansäure, Dodecandiamin/Dodecandisäure, 1,10-Decamethylendiamin/1,10-Decandisäure, weiterhin besonders bevorzugt ausgewählt sein aus 11-Aminoundecansäure, ω-Aminododecansäure, Laurinlactam.

Einige Materialien sind dem Fachmann auch bekannt unter den folgenden Bezeichnungen, die auch im Rahmen der Erfindung verwendet werden.

### Polyamid aus:

| | |
|---|---|
| Hexamethylendiamin/Azelainsäure | PA6.9 |
| Hexamethylendiamin/Dodecandisäure | PA6.12 |
| 11-Aminoundecansäure | PA11 |
| Laurinlactam oder ω-Aminododecansäure | PA12 |
| Tetramethylendiamin/Adipinsäure | PA4.6 |
| Dodecandiamin/Dodecandisäure | PA12.12 |
| Caprolactam/Laurinlactam | PA6.12 |
| 1,1 0-Decamethylendiamin/1,10-Decandisäure | PA10.10 |
| Hexamethylendiamin/ Decandisäure | PA610 |
| Polyamid | PA |
| Polybutylenterephtalat | PBT |
| Polypropylene | PP |
| Polyetherblockamid | PEBA |

Ganz besonders bevorzugt kann die Borstenware gemäß der Erfindung eine Zahnbürste sein.

Anhand der nachfolgenden Beispiele wird die Erfindung näher erläutert.

In allen Beispielen wurden Zahnbürsten aus verschiedenen Materialien bzw. verschiedenen Materialkombinationen konventionellen Verfahren der Rezyklierung unterzogen. Dabei wurden jeweils die Eignung für mechanisches und chemisches Rezyklieren sowie die Haftung der Materialien bewertet.

Im Rahmen der Erfindung ist unter - Eignung für das mechanische Recycling zu verstehen, dass ein weitestgehend sortenreines Polymer wiedergewonnen werden kann.

Eine "schlechte" Eignung ist gleichbedeutend damit, dass Mischungen unterschiedlicher Polymere bzw. unterschiedlich modifizierter Polymere vorliegen, die einen negativen Einfluss z. B. auf Farbe, mechanische Eigenschaften, Toxikologie haben.
- Eignung für das Monomer-Recycling zu verstehen, dass ein weitestgehend sortenreines Polymer wiedergewonnen werden kann. Da geringe Mengen Verunreinigungen abgetrennt werden können, kann das Verfahren prinzipiell breiter als ein mechanisches Recycling genutzt werden.

Eine "schlechte" Eignung bedeutet hier, dass aufgrund eingesetzter komplexer Materialmischungen aufwendige zusätzliche Trennschritte erforderlich sind.
- Haftung der Materialien zu verstehen, dass beide Materialien sich unter Beanspruchung nicht trennen lassen. Dies kann zum Beispiel nach einem Zugversuch nach DIN EN ISO 527 getestet werden.

Vergleichsbeispiele **1 - 3.** Zahnbürste aufweisend jeweils eine Materialkombination aus PA6.12 und PP, PA6.12 und PET bzw. PA6.12, PET und Blockcopolymer aus Styrol-Ethylen-Butylen-Styrol (SEBS).

**Beispiele 1 - 3.** Erfindungsgemäße Zahnbürste, deren Borsten, Kopf, Griff und Hals jeweils aus dem gleichen Polymer: PA6.12 bzw. PA12 bzw. PBT bestehen.

**Beispiele 4 und 5.** Erfindungsgemäße Zahnbürste, deren Borsten, Kopf, Griff und Hals jeweils aus dem gleichen Polymer, nämlich PBT bzw. PA12 bestehen und die zusätzlich ein Grip-Element aus PEBA, basierend auf PA12, bzw. aus PEBA, basierend auf PA6.12, aufweist.

Die Bewertungen sind in der **Tabelle 1** zusammengefasst.

**Tabelle 1. Bewertungen der Rezyklierbarkeit der Zahnbürste sowie Haftung der Materialien.**

| | Borsten | Kopf, Griff und Hals | Grip-Element | Eignung Monomer Recycling | Eignung Monomer Recycling | Haftung der Materialien |
|---|---|---|---|---|---|---|
| Vergleichsbeispiel 1 | PA6.12 | PP | | schlecht | schlecht | schlecht |
| Vergleichsbeispiel 2 | PA6.12 | PET | | schlecht | schlecht | schlecht |
| Vergleichsbeispiel 3 | PA6.12 | PP | SEBS | schlecht | schlecht | schlecht |
| Beispiel 1 | PA6.12 | PA6.12 | | gut | gut | gut |
| Beispiel 2 | PA12 | PA12 | | gut | gut | gut |
| Beispiel 3 | PBT | PBT | | gut | gut | gut |
| Beispiel 4 | PA12 | PA12 | PEBA (PA12) | gut | gut | gut |
| Beispiel 5 | PA612 | PA612 | PEBA (PA6.12) | gut | gut | gut |

## Patentansprüche

1. Borstenware, aufweisend die Bestandteile:
- Monofile oder Borsten, und
- zumindest einen Kopf, Griff, und/oder Hals,
**dadurch gekennzeichnet, dass**
die Bestandteile Polymere aus der gleichen Polymerklasse, ausgewählt aus Polymer und/oder Copolymer, aufweisen oder aus diesem bestehen.

2. Borstenware nach Anspruch 1, wobei der Kopf, Griff, und/oder Hals zumindest ein Grip-Element aufweist und das zumindest eine Grip-Element Polymere aus der gleichen Polymerklasse wie die Bestandteile aufweist oder aus diesem besteht.

3. Borstenware nach Anspruch 1 oder 2, wobei die Bestandteile aus Polymer der gleichen Polymerklasse bestehen.

4. Borstenware nach einem der vorhergehenden Ansprüche, wobei das Polymer oder Copolymer ausgewählt ist aus Polymerisaten der Monomere Hexamethylendiamin/Azelainsäure, Hexamethylendiamin/Dodecandisäure, 11-Aminoundecansäure, ω-Aminododecansäure, Laurinlactam, Tetramethylendiamin/Adipinsäure, Dodecandiamin/Dodecandisäure, Caprolactam/Laurinlactam, Hexamethylendiamin/Decandisäure, 1,10-Decamethylendiamin/1,10-Decandisäure.

5. Borstenware nach Anspruch 4, wobei das Polymer oder Copolymer ein Polymerisat ist aus den Monomeren
Laurinlactam, 11-Aminoundecansäure, ω-Aminododecansäure, Dodecandiamin/Dodecandisäure, 1,10-Decamethylendiamin/1,10-Decandisäure,
besonders bevorzugt
11-Aminoundecansäure, ω-Aminododecansäure, Laurinlactam.

6. Borstenware nach einem der vorhergehenden Ansprüche, wobei die Borstenware eine Zahnbürste ist.
